(19) Europäisches Patentamt
European Patent Office
Office européen des brevets

(11) **EP 2 102 585 B1**

(12) **FASCICULE DE BREVET EUROPEEN**

(45) Date de publication et mention
de la délivrance du brevet:
**23.06.2010 Bulletin 2010/25**

(21) Numéro de dépôt: **07822872.3**

(22) Date de dépôt: **28.11.2007**

(51) Int Cl.:
**G01B 11/16** *(2006.01)*   **G01K 11/32** *(2006.01)*
**G01L 1/24** *(2006.01)*   **B60L 5/24** *(2006.01)*

(86) Numéro de dépôt international:
**PCT/EP2007/062948**

(87) Numéro de publication internationale:
**WO 2008/065140 (05.06.2008 Gazette 2008/23)**

(54) **DISPOSITIF ET PROCÉDÉ DE MESURE DES DÉFORMATIONS MÉCANIQUES D'UN PROFILÉ**

EINRICHTUNG UND VERFAHREN ZUR MESSUNG DER MECHANISCHEN DEFORMIERUNGEN EINES ABSCHNITTS

DEVICE AND METHOD FOR MEASURING THE MECHANICAL DEFORMATIONS OF A SECTION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **30.11.2006 FR 0610459**

(43) Date de publication de la demande:
**23.09.2009 Bulletin 2009/39**

(73) Titulaire: **Commissariat à l'Énergie Atomique et aux Énergies Alternatives
75015 Paris (FR)**

(72) Inventeurs:
• **MAURIN, Laurent**
  **91400 Orsay (FR)**
• **LAFFONT, Guillaume**
  **92190 Meudon (FR)**
• **FERDINAND, Pierre**
  **78800 Houilles (FR)**
• **ROUGEAULT, Stéphane**
  **92330 Sceaux (FR)**

(74) Mandataire: **Callon de Lamarck, Jean-Robert et al
Cabinet Regimbeau
20 rue de Chazelles
75847 Paris cedex 17 (FR)**

(56) Documents cités:
**WO-A-97/15805    FR-A1- 2 850 745
US-A- 5 563 967**

• XU M G ET AL: "THERMALLY-COMPENSATED BENDING GAUGE USING SURFACE-MOUNTED FIBRE GRATINGS" INTERNATIONAL JOURNAL OF OPTOELECTRONICS (INCL.OPTICAL COMPUTING & PROCESSING), TAYLOR & FRANCIS, LONDON, GB, vol. 9, no. 3, 1 mai 1994 (1994-05-01), pages 281-283, XP000483065 ISSN: 0952-5432
• GANDER M J ET AL: "BEND MEASUREMENT USING BRAGG GRATINGS IN MULTICORE FIBRE" ELECTRONICS LETTERS, IEE STEVENAGE, GB, vol. 36, no. 2, 20 janvier 2000 (2000-01-20), pages 120-121, XP000966121 ISSN: 0013-5194
• XU M G ET AL: "DISCRIMINATION BETWEEN STRAIN AND TEMPERATURE EFFECTS USING DUAL-WAVELENGHT FIBRE GRATING SENSORS" ELECTRONICS LETTERS, IEE STEVENAGE, GB, vol. 30, no. 13, 23 juin 1994 (1994-06-23), pages 1085-1087, XP000461239 ISSN: 0013-5194

EP 2 102 585 B1

**Description**

DOMAINE DE L'INVENTION

La présente invention est relative à un dispositif et un procédé de mesure des déformations mécaniques d'un profilé soumis à un effort, et pouvant également être soumis à des variations et des gradients de température importants.
Plus précisément, la présente invention est relative à un dispositif et un procédé mentionnés ci-dessus et pour lesquels le profilé est soumis à un effort générant une flexion et/ou une élongation et/ou une torsion de ce profilé.
Notamment, mais non limitativement, l'invention propose un dispositif permettant de déterminer la compensation à apporter en raison de l'influence des variations de température et de leur gradient, sur la mesure des déformations mécaniques du profilé.
Elle trouve en particulier avantageusement application pour la mesure des déformations générées par une ligne de contact sur une bande de frottement d'un pantographe d'un train.
L'invention concerne également un dispositif et procédé de mesure de variations de température.

ART ANTERIEUR

La mesure à l'aide de capteurs à fibres optiques à réseaux de Bragg des déformations mécaniques d'un profilé requiert des précautions particulières lorsque celui-ci est soumis à :

- des gradients thermiques importants (plusieurs dizaines de K/m),
- une variation rapide dans le temps de la température environnante (plusieurs K/min),
- un niveau moyen de déformations faibles (de l'ordre de quelques dizaines de $\mu$m/m).

Ces conditions sont fréquemment rencontrées dans le domaine ferroviaire au sein des bandes de frottement des pantographes lorsqu'elles sont traversées par le courant électrique apporté par leur ligne de contact : la puissance électrique nécessaire pour mouvoir un train peut en effet atteindre la dizaine de mégawatts, toute cette puissance étant transmise au travers d'une surface de contact limitée à quelques dizaines de mm$^2$ seulement.
Or, sous l'une au moins des conditions exposées ci-dessus, la mesure des déformations mécaniques avec un réseau de Bragg dédié contraint à utiliser un réseau de Bragg additionnel afin de compenser les effets thermiques, entre autre la dépendance thermique de l'indice de réfraction de la fibre optique, sans quoi les mesures sont inexploitables car faussées.
Les solutions utilisées jusqu'à présent dans de telles conditions consistaient à mettre côte à côte deux réseaux de Bragg, que l'on peut par exemple disposer parallèlement sur une même surface, à proximité, mais à une distance non nulle l'un de l'autre (typiquement de l'ordre de quelques millimètres).
Or, on a pu montrer que ces dispositifs, dans des conditions où les gradients thermiques deviennent importants (plusieurs K/m), disposaient d'une compensation thermique insuffisante, avec pour effet une mesure des déformations mécaniques impossible à corriger, même avec des moyens de post-traitement des mesures compte tenu du fait que dans des conditions réelles, il n'est pas possible de connaître, ni de prévoir avec une précision suffisante, la distribution spatiale des gradients thermiques dans les structures généralement instrumentées.
On a par ailleurs proposé de disposer au moins deux réseaux de Bragg (dont l'un pour la compensation thermique) sur des surfaces différentes, à petite distance l'un de l'autre, mais cette topologie n'est pas adaptée aux conditions évoquées ci-dessus.
En particulier, même relativement proches et situés à une distance d l'un de l'autre, les deux réseaux de Bragg, sous l'effet de gradients thermiques $\nabla T$ importants, se trouvent alors soumis à une différence moyenne de température $\Delta T$ proportionnelle à cette distance d et au gradient $\nabla T$ :

$$\Delta T = \nabla T \cdot d \qquad (1)$$

introduisant de ce fait, une erreur moyenne de mesure des déformations mécaniques longitudinales $\delta \Delta \varepsilon_{\nabla T}$, elle aussi proportionnelle à cette distance $d$ et au gradient $\nabla T$ :

$$\delta\Delta\varepsilon_{\nabla T} = \frac{a}{b}\frac{\nabla T \cdot d}{T} \qquad\qquad (2)$$

où, si $\lambda$ est la longueur d'onde caractéristique du réseau de Bragg :

- a est la sensibilité aux variations de $\Delta T/T$ de la quantité $\Delta\lambda/\lambda$,
- b est la sensibilité aux déformations mécaniques longitudinales $\Delta\varepsilon$ de la quantité $\Delta\lambda/\lambda$.

En particulier également, leur disposition parallèle l'un à l'autre sur une même surface, ne permet pas de distinguer les effets thermiques que l'on cherche à compenser des effets mécaniques sur la déformation des réseaux de Bragg.

C'est le cas par exemple du dispositif divulgué dans le document GB 2 408 570, dans lequel le réseau de Bragg de compensation thermique est à distance de l'autre réseau de Bragg pour la mesure des déformations mécaniques. Le document FR-A1-2 850 745 aussi divulgue un tel dispositif.

PRESENTATION DE L'INVENTION

Un objectif de l'invention est donc de proposer un dispositif et un procédé de mesure sensible à des déformations mécaniques d'un profilé, et capable le cas échéant de compenser l'influence des variations de température et de leur gradient sur la mesure des déformations mécaniques, le profilé étant préférentiellement mais non limitativement le support d'une bande de frottement d'un pantographe de motrice électrique de train.

Ainsi, il est notamment proposé un dispositif de mesure des déformations mécaniques d'un profilé, comprenant au moins un capteur à fibre optique à deux réseaux de Bragg 2, 3, le premier réseau de Bragg 2 s'étendant parallèlement à l'axe longitudinal du profilé, et **caractérisé en ce que** le second réseau de Bragg 3 s'étend en croix par rapport au premier réseau de Bragg 2.

Les réseaux de Bragg 2, 3 forment plus précisément entre eux un angle A compris entre 75˚ et 105˚, voire sensiblement égal à 90˚.

Les deux réseaux de Bragg 2, 3 sont préférentiellement superposés à une distance la plus faible possible l'un de l'autre, sans qu'il y ait d'interférence mécanique entre eux. Le fait de les disposer au plus près permet notamment d'éviter ou de limiter l'influence de la température.

Les fibres optiques sur lesquelles sont inscrits les réseaux de Bragg 2, 3 peuvent être fixées, de préférence par collage, sur un support 1 faisant partie intégrante, ou étant solidaire du profilé.

L'invention peut être appliquée à un profilé soumis à un effort générant une flexion et/ou une élongation et/ou une torsion de ce profilé.

Selon l'application considérée, le positionnement exact des réseaux de Bragg pourra être ajusté, tel que décrit par la suite.

Plus précisément, pour une mesure des déformations mécaniques longitudinales induites par flexion verticale, le premier réseau de Bragg 2 est de préférence positionné dans le plan de fibre neutre en flexion horizontale du profilé et le second réseau de Bragg 3 est de préférence disposé perpendiculairement à la normale du plan de fibre neutre en flexion verticale du profilé. Les réseaux de Bragg 2, 3 sont disposés à une distance non nulle du plan de fibre neutre en flexion verticale du profilé.

Pour une mesure des déformations mécaniques longitudinales induites par torsion selon l'axe longitudinal du profilé sur le réseau de Bragg 2, le second réseau de Bragg 3 est de préférence positionné perpendiculairement au plan passant par la position moyenne du réseau de Bragg 2 et l'axe de torsion du profilé. Les réseaux de Bragg 2, 3 sont disposés à une distance non nulle de l'axe de torsion du profilé.

Il est également proposé un procédé de mesure des déformations mécaniques d'un profilé, dans lequel on transmet un signal lumineux dans une ou plusieurs fibres optiques comprenant un ou plusieurs réseaux de Bragg et on traite le signal issu de la ou de chaque fibre optique pour déterminer les longueurs d'onde de Bragg du ou des réseaux de Bragg et pour en déduire une mesure des déformations mécaniques du profilé corrigée de l'influence des variations de température et insensible à leur gradient, **caractérisé en ce que** le dispositif de mesure est un dispositif tel que présenté ci-dessus.

Un objectif de l'invention est aussi de proposer un dispositif et un procédé de mesure des variations de température au voisinage de chaque capteur.

Ainsi, il est notamment proposé une utilisation d'un dispositif pour la mesure des variations de température locale d'un profilé, le dispositif comprenant au moins un capteur à deux réseaux de Bragg, le premier réseau de Bragg s'étendant parallèlement à l'axe longitudinal du profilé, **caractérisé en ce que** le second réseau de Bragg s'étend en croix par rapport au premier réseau de Bragg. Pour cette utilisation, les deux réseaux de Bragg sont préférentiellement superposés et à une distance la plus faible possible l'un de l'autre.

Il est également proposé un procédé de mesure des variations de température d'un profilé, dans lequel on transmet un signal lumineux dans une ou plusieurs fibres optiques comprenant un ou plusieurs réseaux de Bragg et on traite le signal issu de la ou de chaque fibre optique pour déterminer les longueurs d'onde de Bragg du ou des réseaux de Bragg pour en déduire une mesure des variations de température locale au voisinage de chaque capteur, **caractérisé en ce que** le dispositif de mesure est le dispositif présenté ci-dessus.

DESCRIPTION DES FIGURES

D'autres caractéristiques, buts et avantages de la présente invention apparaîtront à la lecture de la description détaillée qui va suivre, et en regard des dessins annexés, donnés à titre d'exemples non limitatifs et sur lesquels:

- la figure 1 est une représentation schématique dans le cas de la flexion des sollicitations en déformations d'un petit élément de volume de matière d'un profilé au voisinage de son plan de fibre neutre en flexion horizontale, plan dont les lignes d'intersection avec le profilé sont représentées en pointillés mixtes longs-courts,
- la figure 2 est une représentation schématique en vue de perspective de la disposition relative des deux réseaux de Bragg dont l'orientation relative est séparée d'un angle A, pour la mesure des déformations mécaniques corrigée des variations de température et insensible aux gradients de température et / ou pour une mesure des variations de température, selon un mode de réalisation de l'invention,
- la figure 3 est une représentation schématique en vue de perspective d'un dispositif comprenant deux réseaux de Bragg disposés en croix dans leur support conforme à un premier mode de réalisation de l'invention,
- les figures 4a à 4e illustrent de façon schématique des variantes de réalisation de rainures destinées à recevoir les fibres optiques sur lesquelles sont inscrits les réseaux de Bragg selon un mode de réalisation possible de l'invention,
- la figure 5 représente un des deux réseaux de Bragg dans son support comportant un espace de dégagement au voisinage du réseau de Bragg,
- la figure 6 est une représentation schématique en vue de perspective d'un dispositif comprenant deux réseaux de Bragg en croix dans leur support conforme à un second mode de réalisation de l'invention,
- la figure 7 est une représentation schématique, en vue de dessous, d'une mise en oeuvre possible d'une série de dispositifs selon l'invention,
- les figures 8a et 8b représentent la vue de face 8a et la vue de dessous 8b d'un archet de pantographe équipé d'une série de dispositifs de mesure conformes à l'invention
- les figures 9a et 9b illustrent de façon schématique la disposition relative des réseaux de Bragg 2, 3 dans le cas d'un profilé non soumis 9a et soumis 9b à des déformations induites par une torsion axiale d'un profilé.

DESCRIPTION D'UN OU PLUSIEURS MODES DE REALISATION ET DE MISE EN OEUVRE

Le dispositif de mesure des déformations mécaniques d'un profilé comprend au moins un capteur à fibre optique à deux réseaux de Bragg 2, 3, le premier réseau de Bragg 2 s'étendant parallèlement à l'axe longitudinal du profilé, et le second réseau de Bragg 3 s'étend en croix par rapport au premier réseau de Bragg.

Les déformations mécaniques longitudinales locales respectives $\varepsilon$ et $\varepsilon_\perp$, des deux réseaux de Bragg 2, 3, s'expriment de façon générale selon les relations :

$$\begin{cases} \varepsilon = \dfrac{\left(\left[\varepsilon\right]\cdot\vec{u}\right).\vec{u}}{\left\|\vec{u}\right\|^2} \\[4mm] \varepsilon_\perp = \dfrac{\left(\left[\varepsilon_\perp\right]\cdot\vec{u}_\perp\right).\vec{u}_\perp}{\left\|\vec{u}_\perp\right\|^2} \end{cases} \qquad (3)$$

où :

- $\vec{u}$ et $\vec{u}_\perp$ sont les orientations respectives de la fibre optique à l'endroit où sont positionnés les réseaux de Bragg 2, 3,
- et $[\varepsilon]$ et $[\varepsilon_\perp]$ sont respectivement les tenseurs de Green-Lagrange des déformations mécaniques locales de la fibre optique où sont positionnés les réseaux de Bragg 2, 3.

Par ailleurs, les réseaux de Bragg 2, 3 sont disposés à proximité l'un de l'autre, de sorte que les biais de mesure introduits par les gradients thermiques sont très fortement réduits comme le décrit la formule (2). On superpose les réseaux de Bragg 2 et 3, sans que les portions de fibre optique sur lesquelles ils sont inscrits ne se touchent, ou dans la limite d'un contact sans contrainte (on évite ou limite de cette façon les interférences mécaniques entre les réseaux de Bragg).

La ou les fibres optiques comportant les deux réseaux de Bragg 2, 3 peuvent être montées, fixées, de préférence par collage, sur un même support 1 et à proximité l'un de l'autre. Ainsi, les réseaux de Bragg 2, 3 sont à la fois soumis aux mêmes températures et variations de température locales, et parce qu'ils sont solidaires du même support 1, au même tenseur des déformations mécaniques local : il est en effet possible de considérer que leurs tenseurs des déformations mécaniques locales respectifs $[\varepsilon]$ et $[\varepsilon_\perp]$ sont alors identiques à celui du support $[\varepsilon_s]$ à un coefficient correcteur respectif $[K]$ et $[K_\perp]$ près, tous deux, en norme, proches de l'unité.

$$\begin{cases}[\varepsilon]=[K]\cdot[\varepsilon_s]\\ [\varepsilon_\perp]=[K_\perp]\cdot[\varepsilon_s]\end{cases} \quad avec \quad \|[K]\|\approx\|[K_\perp]\|\approx 1 \quad \Rightarrow \quad \begin{cases}\varepsilon \approx \dfrac{([\varepsilon_s]\cdot\vec{u}).\vec{u}}{\|\vec{u}\|^2}\\ \varepsilon_\perp \approx \dfrac{([\varepsilon_s]\cdot\vec{u}_\perp).\vec{u}_\perp}{\|\vec{u}_\perp\|^2}\end{cases} \qquad \text{(3 bis)}$$

Les déformations longitudinales $\varepsilon$ et $\varepsilon_\perp$ subies par les réseaux de Bragg 2, 3 sont donc à l'image des déformations du support 1, lorsque celui-ci est mis en oeuvre.

D'autre part, afin de maximiser les déformations à mesurer, on positionne le réseau de Bragg 2 dans la même direction que l'axe longitudinal du profilé.

Dans le cadre d'une sollicitation mécanique simple en élongation selon l'axe longitudinal du profilé, le réseau de Bragg 2 subit une variation de déformation mécanique longitudinale $\Delta\varepsilon$, et la variation de déformation mécanique $\Delta\varepsilon_\perp$ du réseau de Bragg 3, résultante de l'effet transverse de Poisson, s'écrit selon la relation (v étant le coefficient de Poisson du support, de l'ordre de 0,3 pour les métaux) :

$$\Delta\varepsilon_\perp = -v.\Delta\varepsilon \qquad\qquad (4)$$

La même relation (4) s'applique aussi dans le cadre d'une seule sollicitation mécanique en flexion verticale du profilé où la déformation mécanique du réseau de Bragg 2 peut être localement assimilée à une élongation simple. Afin de maximiser la sensibilité de mesure des déformations mécaniques longitudinales, les réseaux de Bragg 2, 3 sont disposés préférentiellement sur une surface de sensibilité maximale aux efforts verticaux. Ceci est obtenu en disposant les réseaux de Bragg à distance du plan de fibre neutre en flexion verticale du profilé.

De la même façon, cette relation (4) s'applique encore dans le cas d'une torsion simple selon l'axe longitudinal du profilé lorsque le réseau de Bragg 3 est placé perpendiculairement au plan passant par la position moyenne du réseau de Bragg 2 et l'axe de torsion du profilé. La sensibilité de mesure maximale est alors obtenue en disposant les réseaux de Bragg à distance de l'axe de torsion du profilé.

De même, il est encore possible d'appliquer cette relation dans le cas d'une sollicitation combinée d'une élongation selon l'axe du profilé, et/ou d'une flexion verticale du profilé, et/ou d'une torsion selon l'axe longitudinal du profilé où dans ce dernier cas, le réseau de Bragg 3 est de préférence positionné perpendiculairement au plan passant par la position moyenne du réseau de Bragg 2 et l'axe de torsion du profilé.

Dans ce cas de la sollicitation combinée, la déformation mécanique longitudinale du profilé $\Delta\varepsilon$ résultante est, dans le cadre d'une sollicitation en déformations élastiques du support, la somme des déformations mécaniques longitudinales élémentaires générées sous l'effet d'une élongation simple selon l'axe longitudinal $\Delta\varepsilon_{\text{élongation}}$ du profilé, des déformations mécaniques longitudinales générées sous l'effet d'une flexion verticale simple $\Delta\varepsilon_{\text{flexion}}$ verticale, et des déformations mécaniques longitudinales générées par une torsion simple $\Delta\varepsilon_{\text{torsion}}$ selon l'axe longitudinal du profil : $\Delta\varepsilon=\Delta\varepsilon_{\text{élongation}}+\Delta\varepsilon_{\text{flexion verticale}}+\Delta\varepsilon_{\text{torsion}}$.

Cependant, le nombre de réseaux de Bragg nécessaires pour la dissociation des composantes d'élongation $\Delta\varepsilon_{\text{élongation}}$, de flexion verticale $\Delta\varepsilon_{\text{flexion verticale}}$ et de torsion $\Delta\varepsilon_{\text{torsion}}$ est insuffisant (le système à résoudre présentant alors plus d'inconnues que d'équations) ; il est dans ce cas nécessaire de faire appel à des capteurs supplémentaires.

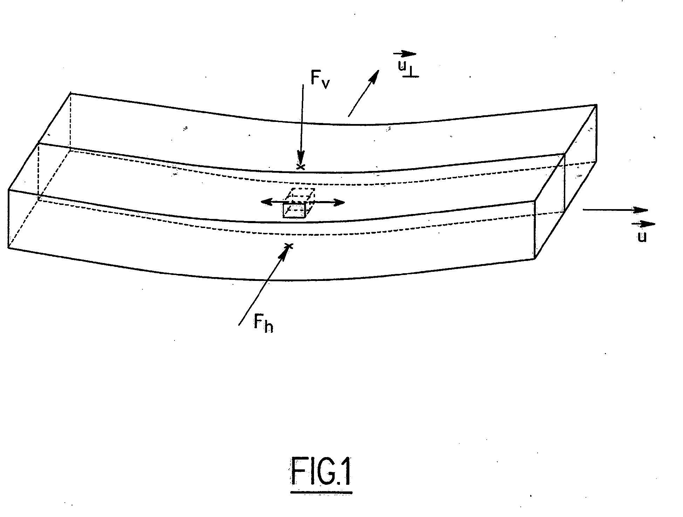

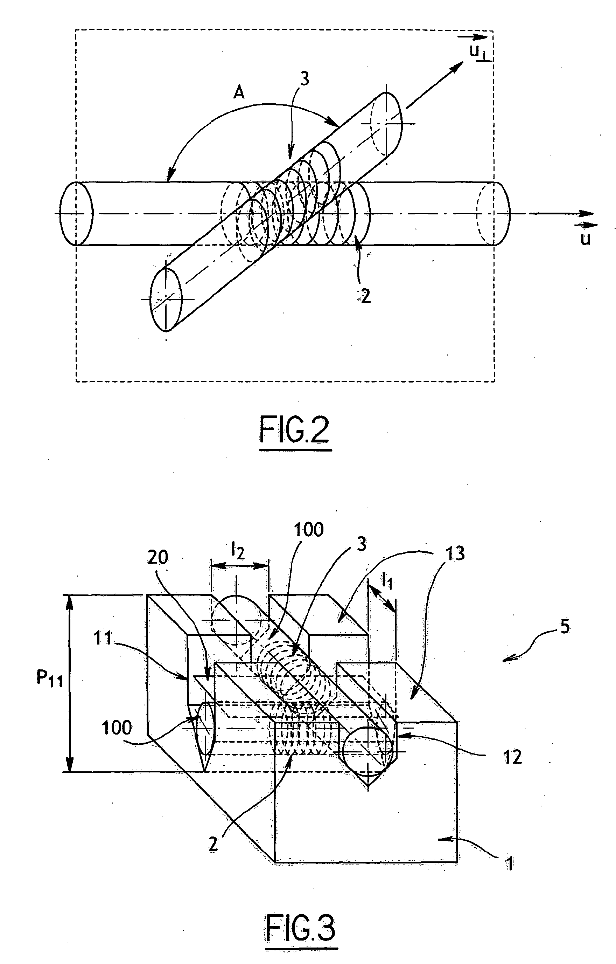

Enfin, dans le cas d'une flexion horizontale additionnelle, il est alors nécessaire de positionner le réseau de Bragg 3 dans le voisinage du plan de fibre neutre en flexion horizontale qu'il traverse avec une inclinaison selon un angle proche d'un angle droit (A = 90˚ ± 15˚ en général) pour que la relation de Poisson définie par l'équation (4) soit toujours valide (voir Fig. 1 et 2).

En effet, tout autre positionnement du réseau de Bragg 3 ferait apparaître une composante de déformations mécaniques additionnelle significative (résultante de cette flexion horizontale additionnelle, dont la valeur absolue est minimale dans le voisinage de son plan de fibre neutre) qu'il ne serait pas possible de déterminer avec uniquement deux réseaux de Bragg (le système à résoudre présentant alors plus d'inconnues que d'équations).

Dans le cas d'un telle flexion horizontale additionnelle, le réseau de Bragg 3 est ainsi disposé en croix, selon un angle proche de l'angle droit, par rapport au réseau de Bragg 2, ainsi qu'à la normale du plan de fibre neutre en flexion verticale du profilé, c'est-à-dire en croix, selon un angle proche de l'angle droit, par rapport à la direction principale des efforts de flexion verticaux.

Cette composante de flexion horizontale additionnelle est par exemple induite par frottement de la ligne de contact électrique sur la bande de frottement d'un pantographe pour motrice de train électrique.

Outre les avantages liés à la compensation des variations de température et de leur gradient mentionnés ci-dessus par la proximité des deux réseaux de Bragg, leur position en croix dans des plans de déformations particuliers tel que décrit plus haut permet d'optimiser la sensibilité en déformations mécaniques du dispositif, en particulier, on a les relations :

$$\begin{cases} \dfrac{\Delta\lambda}{\lambda} = a \cdot \dfrac{\Delta T}{T} + b.\Delta\varepsilon \\[2mm] \dfrac{\Delta\lambda_\perp}{\lambda_\perp} = a \cdot \dfrac{\Delta T}{T} - b\nu.\Delta\varepsilon \end{cases} \qquad (5)$$

où :

- $\lambda$ est la longueur d'onde du réseau de Bragg de mesure des déformations mécaniques longitudinale du réseau de Bragg 2,
- $\lambda_\perp$ est la longueur d'onde du réseau de Bragg de compensation thermique 3,
- b est la sensibilité aux déformations mécaniques $\Delta\varepsilon$ des quantités $\Delta\lambda/\lambda$ et $\Delta\lambda_\perp/\lambda_\perp$,
- $\Delta\varepsilon$ est la variation de déformation mécanique longitudinale du réseau de Bragg 2,
- $\nu$ est le coefficient de Poisson du support 1.

Il apparaît, par soustraction des effets thermiques dans les équations (5) ci-dessus, que les effets mécaniques transverses dus à l'effet Poisson mesurés par le réseau de Bragg 3 s'ajoutent aux mesures fournies par le réseau de Bragg de mesure des déformations mécaniques longitudinales 2, selon la relation (disposition en croix) :

$$\Delta\varepsilon = \frac{1}{b.(1+\nu)}\left( \frac{\Delta\lambda}{\lambda} - \frac{\Delta\lambda_\perp}{\lambda_\perp} \right) \qquad (6)$$

améliorant d'un facteur 1+ν la sensibilité de mesure en déformations mécaniques des dispositifs traditionnels à compensation thermique simple, dont le réseau de Bragg compensateur est mécaniquement isolé des déformations de son support, et seulement sensible aux variations de température environnante.

Ainsi, on profitera d'un support 1 présentant un coefficient de Poisson ν élevé, par exemple, mais non limitativement de l'aluminium (ν ~ 0,345) pour disposer d'un effet amplificateur intrinsèque maximal. De préférence, on choisit un matériau dont le coefficient de Poisson est compris entre 0,2 et 0,5.

Evaluation de l'influence de l'erreur d'orientation orthogonale sur la mesure de $\Delta\varepsilon$.

On suppose que le réseau de Bragg 3 est placé, par rapport à l'autre réseau 2, à un angle A ≠ π/2.

Le système d'équations de la configuration des réseaux de Bragg en croix devient alors :

$$\begin{cases} \dfrac{\Delta\lambda}{\lambda} = a \cdot \dfrac{\Delta T}{T} + b \cdot \Delta\varepsilon \\[2ex] \dfrac{\Delta\lambda_A}{\lambda_A} = a \cdot \dfrac{\Delta T}{T} + b \cdot \Delta\varepsilon \cdot \left(\cos^2 A - \nu \cdot \sin^2 A\right) \end{cases}$$

qui conduit à une valeur de déformation $\Delta\varepsilon$ :

$$\Delta\varepsilon(A) = \frac{1}{b \cdot (1+\nu) \cdot \sin^2 A} \cdot \left(\frac{\Delta\lambda}{\lambda} - \frac{\Delta\lambda_A}{\lambda_A}\right)$$

Il apparaît, par rapport à l'équation (6), un terme proportionnel supplémentaire en $1/\sin^2 A$.

La sensibilité de mesure en déformations mécaniques du dispositif en croix est, dans cette configuration, améliorée d'un facteur $(1+\nu).\sin^2 A$ par rapport à un dispositif traditionnel à compensation thermique simple.

L'erreur relative de mesure $E_A(\Delta\varepsilon)$ sur $\Delta\varepsilon$ devient dans ces conditions :

$$E_A(\Delta\varepsilon) = \frac{1}{\tan^2 A}$$

Application numérique :

$$75° \le A \le 105° \Rightarrow \max\left[E_A(\Delta\varepsilon)\right] = 7{,}2\%$$

$$82° \le A \le 98° \Rightarrow \max\left[E_A(\Delta\varepsilon)\right] = 2\%$$

Dans cette configuration typique d'erreur d'orientation entre le réseau de Bragg axial (2) et le réseau de Bragg transverse (3), on évalue ainsi que pour un angle A compris entre 75˚ et 105˚, l'erreur relative sera au maximum de 7,2 %. De même, pour un angle A compris entre 82˚ et 98˚, l'erreur relative sera au maximum de 2 %. On pourra donc choisir l'angle A en fonction de la précision souhaitée, sachant qu'en général, il sera considéré une valeur A comprise entre 75 et 105˚ pour les applications considérées, cette gamme de valeurs n'ayant rien de limitatif.

Dans le cas d'un profilé soumis à une flexion verticale, les réseaux de Bragg sont avantageusement positionnés à une distance non nulle du plan de fibre neutre en flexion verticale du profilé pour obtenir un effet d'amplification intrinsèque supplémentaire du fait de l'augmentation des quantités $\Delta\lambda$ et $\Delta\lambda_\perp$.

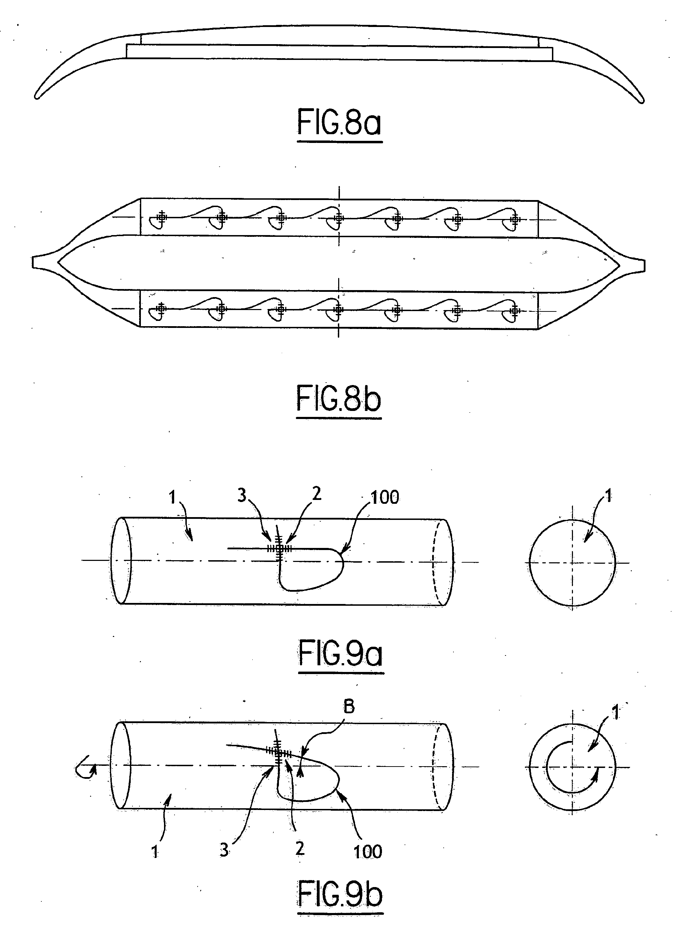

Dans le cas d'un profilé soumis à une torsion axiale, le réseau de Bragg 3 est préférentiellement placé perpendiculairement au plan passant par la position moyenne du réseau de Bragg 2 et l'axe de torsion du profilé. La sensibilité de mesure maximale est alors obtenue en disposant les réseaux de Bragg à une distance maximale de l'axe de torsion du profilé. On a représenté figure 9a un profilé cylindrique non soumis à une torsion, sur lequel est disposé un capteur à réseaux de Bragg 2, 3 conforme à l'invention. Sur la figure 9b, on a représenté le même profilé soumis à une torsion axiale. Sous l'effet de cette torsion, le, réseau de Bragg 2 se déforme longitudinalement en traction en suivant une génératrice hélicoïdale dont l'angle B par rapport à l'axe du profilé est proportionnel à l'amplitude de la torsion appliquée, tandis que le réseau de Bragg 3 ne subit que la déformation induite par effet Poisson.

On forme ainsi un capteur avec un réseau de Bragg de mesure des déformations mécaniques longitudinales 2 et un réseau de Bragg de compensation thermique 3, ceux-ci étant superposés et disposés en croix l'un par rapport à l'autre, montés tous deux sur un même support 1 (ce support pouvant faire partie intégrante du profilé), et enfin de sorte que les fibres optiques sur lesquelles sont inscrits ces réseaux de Bragg n'interfèrent pas mécaniquement entre elles.

Le dispositif de l'invention peut également être utilisé pour une mesure directe de la variation de température locale $\Delta T$ au voisinage de chaque capteur.

En effet, on peut établir les relations suivantes (7) et (8) entre la mesure de variation des longueurs d'onde de Bragg des deux réseaux de Bragg et ΔT, extraites pour partie des équations (5) :

- dans le cas général, notamment pour de grandes variations de température (formule valable pour toute variation de température |ΔT| et notamment pour |ΔT| > 30 K) :

$$\Delta T = T \cdot \left[ \left( \frac{\left( 1 + \dfrac{\Delta \lambda}{\lambda} \right)^{\nu}}{1 + \dfrac{\Delta \lambda_{\perp}}{\lambda_{\perp}}} \right)^{\frac{1}{a.(1+\nu)}} - 1 \right] \qquad (7)$$

- dans le cas où les variations de température restent faibles (|ΔT| ≤ 30 K), cette formule s'approxime par :

$$\Delta T \approx \frac{T}{a.(1+\nu)} \cdot \left[ \nu \cdot \frac{\Delta \lambda}{\lambda} + \frac{\Delta \lambda_{\perp}}{\lambda_{\perp}} \right] \qquad (8)$$

où :

- T est une température de référence de calibrage (dont la valeur reste constante),
- ΔT est la variation de température par rapport à la température de référence T,
- λ est la longueur d'onde du réseau de Bragg de mesure des déformations mécaniques longitudinales 2,
- $\lambda_{\perp}$ est la longueur d'onde du réseau de Bragg de compensation thermique 3,
- a est la sensibilité en ΔT/T des quantités $\Delta \lambda / \lambda$ et $\Delta \lambda_{\perp} / \lambda_{\perp}$ respectivement des réseaux de Bragg 2 et 3 solidaires de leur support, cette sensibilité pouvant elle-même dépendre de la température,
- ν est le coefficient de Poisson du support 1.

Le dispositif et le procédé de l'invention présentent ainsi l'avantage de pouvoir fournir simultanément une mesure locale des déformations mécaniques longitudinales et des variations de température.

Un premier exemple de réalisation du capteur, et notamment du support 1 est illustré à la figure 3.

Sur cette figure 3, le support 1, représenté ici sous forme parallélépipédique, comprend deux rainures 11, 12 de largeurs $l_1$, $l_2$ respectives au moins égales au diamètre de la fibre optique sur laquelle est inscrit le réseau de Bragg respectif 2, 3 et s'étendant jusqu'à la surface 13 du support 1.

La rainure 11, destinée à recevoir de préférence le réseau de Bragg de mesure des déformations mécaniques longitudinales 2, présente une profondeur P11 plus importante que celle de la rainure 12, de valeur suffisante pour permettre la superposition des fibres optiques sans interférences mécaniques entre elles. Toute interférence mécanique entre les fibres optiques supportant les réseaux de Bragg 2, 3 introduirait en effet une erreur dans les mesures puisqu'elle modifierait la signature spectrale des réseaux de Bragg d'une façon difficilement prédictible.

On notera que l'on peut en outre prévoir des moyens insérés entre les deux fibres optiques pour éviter toute interférence mécanique, et plus généralement pour éviter toute résistance mécanique entre les réseaux de Bragg 2, 3, malgré la présence de colle dans les rainures 11, 12. Ces moyens sont par exemple formés par un ou plusieurs feuillets 20 fins, libres de glisser l'un par rapport à l'autre, de préférence en métal et en particulier en aluminium, ou en tout autre matériau ayant les propriétés thermomécaniques requises pour l'application considérée.

On peut aussi s'arranger pour que les portions de fibre optique sur lesquelles les réseaux de Bragg 2, 3 sont inscrits ne soient pas en contact avec le support 1, mais que seules les extrémités de la fibre optique 100 éloignées des zones d'inscription des réseaux de Bragg soient en contact (par exemple par collage) avec le support 1.

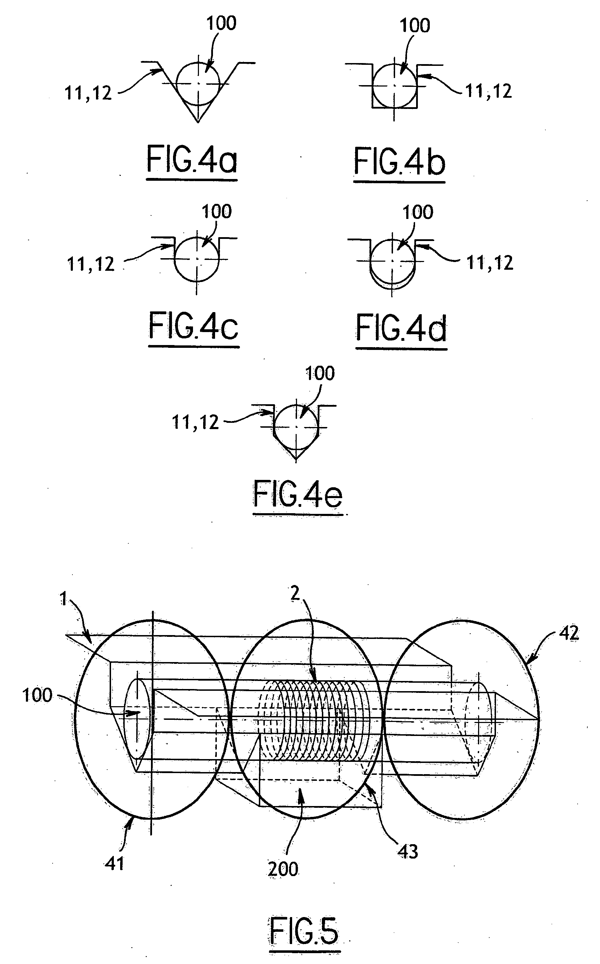

Une telle solution est illustrée sur la figure 5 pour un seul 2 des réseaux de Bragg 2, 3.

Sur cette figure 5, le réseau de Bragg 2 inscrit sur la fibre optique 100 est disposé dans un volume de dégagement 200 du support 1 (la zone 43 de la fibre optique 100 où se situe le réseau de Bragg est donc au-dessus du « vide »), les zones 41, 42 de la fibre optique 100 fixées (de préférence collées) sur le support 1 ne portant pas de réseau de Bragg.

La rainure 12 présente quant à elle une profondeur suffisante pour que la fibre optique qu'elle supporte n'affleure pas à la surface 13 du support 1.

De préférence, le fond des rainures 11, 12 est en forme de V de sorte que les portions de fibre optique présentent deux lignes de contact avec la rainure.

Toutefois, cette forme en V du fond des rainures n'a rien de limitatif, et on pourra parfaitement envisager d'autres formes comme celles illustrées sur les figures 4a à 4e, à savoir une rainure en V s'étendant jusqu'à la surface du support (Fig. 4a), une rainure carrée (Fig. 4b) par exemple de côté sensiblement égal au diamètre de la fibre optique, un demi-cylindre de diamètre sensiblement égal au diamètre de la fibre optique (Fig. 4c et 4d), ou une rainure dont les profils affleurant en surface sont de base carrée, mais dont le fond de rainure est en V (Fig. 4e).

Notamment, pour l'application au pantographe, le support 1 présenté ci-dessus, peut être usiné directement dans le profilé, généralement en aluminium, et qui est solidaire d'une bande de frottement d'un pantographe. Les réseaux de Bragg 2, 3 sont placés sur la face inférieure de ce support 1 pour profiter d'une meilleure amplification des déformations mécaniques longitudinales (grâce à leur éloignement du plan de fibre neutre en flexion verticale).

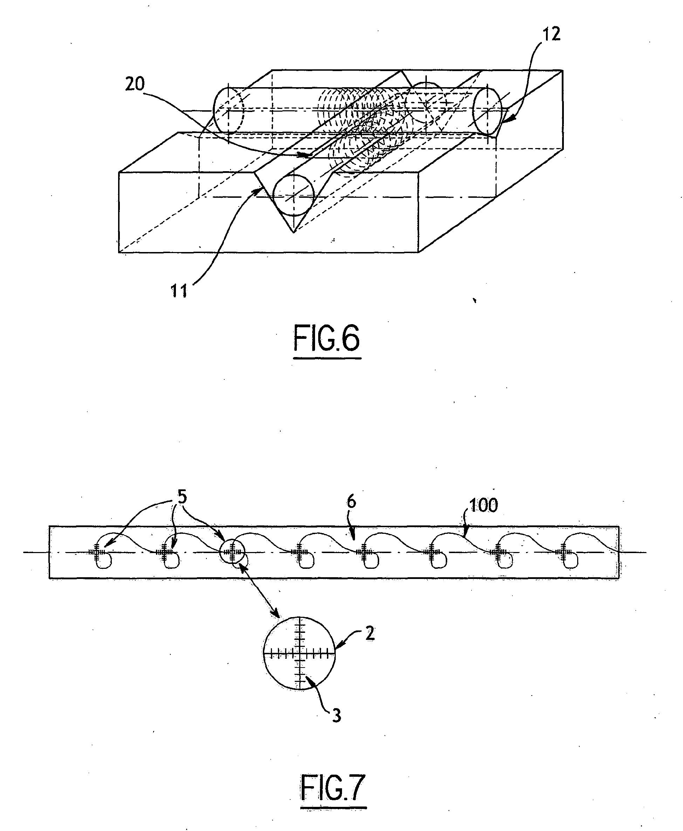

Un second exemple de réalisation du capteur, et notamment du support 1 est illustré à la figure 6.

Sur cette figure 6, le support 1, représenté ici sous forme parallélépipédique, comprend deux rainures 11, 12 de largeurs $l_1$, $l_2$ respectives au moins égales au diamètre de la fibre optique sur laquelle est inscrit le réseau de Bragg respectif 2, 3 et en V s'étendant jusqu'à la surface 13 du support 1.

De la même manière que dans le dispositif de la figure 3, la rainure 11, destinée à recevoir de préférence le réseau de Bragg de mesure des déformations mécaniques longitudinales 2, présente une profondeur P11 plus importante que celle de la rainure 12, de valeur suffisante pour permettre la superposition des fibres optiques sans interférences mécaniques entre elles. Toute interférence mécanique entre les fibres optiques supportant les réseaux de Bragg 2, 3 introduirait en effet une erreur dans les mesures puisqu'elle modifierait la signature spectrale des réseaux de Bragg d'une façon difficilement prédictible.

De même, on peut en outre prévoir des moyens insérés entre les deux fibres optiques pour éviter toute interférence mécanique, et plus généralement pour éviter toute résistance mécanique entre les réseaux de Bragg 2, 3, malgré la présence de colle dans les rainures 11, 12. Ces moyens sont par exemple formés par un ou plusieurs feuillets 20 fins, libres de glisser l'un par rapport à l'autre, de préférence en métal et en aluminium, ou en tout autre matériau ayant les propriétés thermomécaniques requises pour l'application considérée.

Dans le dispositif de la figure 6, les rainures 11, 12 sont formées par des vés à angle droit. Ce mode de réalisation est particulièrement avantageux lorsque l'épaisseur de matière du support 1 est insuffisante pour usiner des rainures plus profondes dans le profilé, telles que les rainures décrites sur la figure 3.

Dans la pratique, on pourra prendre en compte une pluralité de capteurs tels que décrits ci-dessus, disposés de manière indépendante par exemple, c'est-à-dire avec un système d'interrogation propre.

Toutefois, il sera préférable - du point de vue du système de mesure, mais aussi pour minimiser le nombre de fibres, de connexions et de câbles - de mettre en oeuvre un dispositif comprenant une pluralité de capteurs disposés en série sur une même fibre optique 100, le long du profilé 6, chaque capteur 5 comprenant un réseau de Bragg de mesure des déformations mécaniques longitudinales 2 et un réseau de Bragg de compensation thermique 3, disposés comme exposé ci-dessus.

Un premier agencement de tels dispositifs en série le long de l'axe longitudinal d'un profilé est illustré sur la figure 7.

La figure 8 illustre l'application d'un tel dispositif de mesure en série, sur chacune des bandes de frottement en carbone ou cuivre (ici solidaires car fixées sur une armature rigide composite) d'un archet pour pantographe TGV de type CX25. Les capteurs sont ici fixés en partie inférieure de chacune des bandes de frottement de manière à profiter d'un effet amplificateur maximal, ainsi que pour se protéger des agressions mécaniques extérieures, provenant notamment du contact entre le fil caténaire et les bandes de frottement.

On notera enfin que l'invention, particulièrement avantageuse, peut répondre aux contraintes suivantes :

- une déformation longitudinale maximale induite par flexion verticale de l'ordre de 300 $\mu$m/m correspondant à 500 N de dynamique en force verticale pour des géométries de pantographes pour TGV de type CX25,
- la présence d'efforts de frottements générés par le fil de contact sur la bande de frottement,
- une amplitude thermique pouvant largement dépasser 50 K,
- des gradients thermiques pouvant largement dépasser 100 K/m,

avec des spécifications de précision et de résolution de mesure:

- de l'ordre de 0,6 $\mu$m/m en déformations mécaniques, équivalent à 1 N en force de contact verticale pour des géométries de pantographes de type CX25,
- de l'ordre de 1 K en température.

D'autres applications à la mesure de flexion, élongation et/ou torsion de tout type de profilé soumis à des variations de température peuvent être dérivées du dispositif et procédé de mesure décrits ci-dessus.

**Revendications**

1. Dispositif de mesure des déformations mécaniques d'un profilé corrigées des variations de température locale et de mesure de ces variations de température locale au voisinage dudit dispositif de mesure, comprenant au moins un capteur à fibre optique à deux réseaux de Bragg (2, 3), le capteur étant soumis aux déformations mécaniques du profilé et sensible aux variations de température locale, le premier réseau de Bragg (2) s'étendant parallèlement à l'axe longitudinal du profilé, **caractérisé en ce que** le second réseau de Bragg (3) s'étend en croix par rapport au premier réseau de Bragg (2), et **en ce que** les portions de fibre optique sur lesquelles sont inscrits les deux réseaux de Bragg (2, 3) sont superposées à une distance la plus faible possible l'une de l'autre, sans qu'il y ait d'interférence mécanique entre lesdites portions de fibre optique ou dans la limite d'un contact sans contrainte.

2. Dispositif selon la revendication 1, **caractérisé en ce que** les réseaux de Bragg (2, 3) forment entre eux un angle A compris entre 75˚ et 105˚.

3. Dispositif selon la revendication précédente, **caractérisé en ce que** l'angle A formé entre les réseaux de Bragg (2, 3) est sensiblement égal à 90˚.

4. Dispositif selon l'une des revendications précédentes, **caractérisé en ce que** les fibres optiques comportant le premier (2) et le second (3) réseau de Bragg sont fixées, et de préférence collées, sur un support (1) faisant partie intégrante, ou solidaire du profilé.

5. Dispositif selon l'une des revendications précédentes, **caractérisé en ce que** le premier réseau de Bragg (2), sensible aux variations de température et aux déformations mécaniques longitudinales induites par flexion verticale, est disposé dans le plan neutre des déformations en flexion horizontale du profilé.

6. Dispositif selon l'une des revendications précédentes, **caractérisé en ce que** le second réseau de Bragg (3), sensible aux variations de température et aux déformations mécaniques longitudinales induites par flexion verticale, est superposé au premier réseau de Bragg (2) et est sensiblement perpendiculaire à la normale du plan de fibre neutre en flexion verticale du profilé.

7. Dispositif selon l'une des revendications 5 ou 6, **caractérisé en ce que** les réseaux de Bragg (2, 3) sont disposés à une distance non nulle du plan de fibre neutre en flexion verticale du profilé.

8. Dispositif selon l'une des revendications 1 à 5, sensible aux déformations mécaniques longitudinales induites par une torsion axiale du profilé, **caractérisé en ce que** le second réseau de Bragg (3) est positionné perpendiculairement au plan passant par la position moyenne du réseau de Bragg (2) et l'axe de torsion du profilé.

9. Dispositif selon la revendication précédente, **caractérisé en ce que** les réseaux de Bragg (2, 3) sont disposés à une distance non nulle de l'axe de torsion du profilé.

10. Dispositif selon l'une des revendications précédentes, **caractérisé en ce qu'**il comprend une pluralité de capteurs, disposés en série le long de l'axe du profilé, et reliés entre eux par une fibre optique (4) commune.

11. Dispositif selon l'une des revendications précédentes, **caractérisé en ce que** les réseaux de Bragg (2, 3) sont montés sur le support de la bande de frottement d'un pantographe pour motrice électrique de train.

12. Procédé de mesure des déformations mécaniques d'un profilé muni d'un dispositif selon l'une des revendications précédentes, dans lequel on transmet un signal lumineux dans au moins une fibre optique comprenant au moins deux réseaux de Bragg (2, 3) et on traite le signal issu de la ou de chaque fibre optique pour déterminer les longueurs d'onde de Bragg des réseaux de Bragg et pour en déduire une mesure des déformations mécaniques du profilé corrigée de l'influence des variations de température.

13. Procédé selon la revendication précédente, dans lequel on mesure une variation des déformations mécaniques longitudinales $\Delta\varepsilon$ induites par flexion et/ou élongation et/ou torsion du profilé à partir des variations relatives $\Delta\lambda/\lambda$

et $\Delta\lambda_\perp/\lambda_\perp$ de longueur d'onde de Bragg des réseaux de Bragg 2 et 3 selon la formule :

$$\Delta\varepsilon = \frac{1}{b.(1+\nu)}\left(\frac{\Delta\lambda}{\lambda} - \frac{\Delta\lambda_\perp}{\lambda_\perp}\right)$$

où b est la sensibilité aux déformations mécaniques longitudinales $\Delta\varepsilon$ des quantités $\Delta\lambda/\lambda$ et $\Delta\lambda_\perp/\lambda_\perp$, et $\nu$ le coefficient de Poisson du support 1.

14. Procédé de mesure des variations de température locale au voisinage d'un dispositif selon l'une des revendications 1 à 16 monté sur un profilé, dans lequel on transmet un signal lumineux dans au moins une fibre optique comprenant au moins deux réseaux de Bragg (2, 3) et on traite le signal issu de la ou de chaque fibre optique pour déterminer les longueurs d'onde de Bragg des réseaux de Bragg pour en déduire une mesure des variations de température locale.

15. Procédé selon la revendication précédente, dans lequel on mesure une variation de température locale $\Delta T$ d'un profilé, à partir des variations relatives $\nabla\lambda/\lambda$ et $\Delta\lambda_\perp/\lambda_\perp$ des longueurs d'onde de Bragg des réseaux de Bragg (2, 3) selon la formule :

$$\Delta T = T.\left[\left(\frac{\left(1+\frac{\Delta\lambda}{\lambda}\right)^\nu}{1+\frac{\Delta\lambda_\perp}{\lambda_\perp}}\right)^{\frac{1}{a.(1+\nu)}} - 1\right]$$

où a est la sensibilité en $\Delta T/T$ des quantités $\Delta\lambda/\lambda$ et $\Delta\lambda_\perp/\lambda_\perp$, et $\nu$ est le coefficient de Poisson du support 1.

**Claims**

1. Device for measuring the mechanical strains in a section that are corrected for local temperature variations and for measuring these local temperature variations in the vicinity of said measurement device, comprising at least one fibre-optic sensor having two Bragg gratings (2, 3), the sensor being subjected to mechanical strains of the section and being sensitive to the local temperature variations, the first Bragg grating (2) lying parallel to the longitudinal axis of the section, **characterized in that** the second Bragg grating (3) extends in the manner of a cross relative to the first Bragg grating (2) and **in that** the optical fibre portions on which the two Bragg gratings (2, 3) are written are superposed at a shortest possible distance from each other, without there being any mechanical interference between said optical fibre portions or, in the limit, any strain-free contact.

2. Device according to Claim 1, **characterized in that** the Bragg gratings (2, 3) make an angle A of between 75° and 105° between them.

3. Device according to the preceding claim, **characterized in that** the angle A formed between the Bragg gratings (2, 3) is approximately equal to 90°.

4. Device according to one of the preceding claims, **characterized in that** the optical fibres comprising the first (2) and second (3) Bragg gratings are fixed, and preferably bonded, to a support (1) forming an integral part of the section or being firmly attached thereto.

5. Device according to one of the preceding claims, **characterized in that** the first Bragg grating (2), sensitive to the temperature variations and to the longitudinal mechanical strains induced by vertical bending, is placed in the neutral plane of the horizontal flexural strains of the section.

**6.** Device according to one of the preceding claims, **characterized in that** the second Bragg grating (3), sensitive to the temperature variations and to the longitudinal mechanical strains induced by vertical bending, is superposed on the first Bragg grating (2) and is approximately perpendicular to the normal of the neutral fibre plane in vertical bending of the section.

**7.** Device according to either of Claims 5 and 6, **characterized in that** the Bragg gratings (2, 3) are placed at a non-zero distance from the neutral fibre plane in vertical bending of the section.

**8.** Device according to one of Claims 1 to 5, which is sensitive to the longitudinal mechanical strains induced by axial torsion of the section, **characterized in that** the second Bragg grating (3) is positioned perpendicularly to the plane passing through the mean position of the Bragg grating (2) and the torsion axis of the section.

**9.** Device according to the preceding claim, **characterized in that** the Bragg gratings (2, 3) are placed at a non-zero distance from the torsion axis of the section.

**10.** Device according to one of the preceding claims, **characterized in that** it comprises a plurality of sensors that are placed in series along the axis of the section and connected together via a common optical fibre (4).

**11.** Device according to one of the preceding claims, **characterized in that** the Bragg gratings (2, 3) are mounted on the support for the rubbing strip of an electric train drive pantograph.

**12.** Method of measuring the mechanical strains of a section provided with a device according to one of the preceding claims, in which a light signal is transmitted in at least one optical fibre comprising at least two Bragg gratings (2, 3) and the signal output by the or each optical fibre is processed in order to determine the Bragg wavelengths of the Bragg gratings and to deduce therefrom a measurement of the mechanical strains of the section corrected for the influence of the temperature variations.

**13.** Method according to the preceding claim, in which a variation of the longitudinal mechanical strains $\Delta\varepsilon$ induced by bending and/or elongation and/or torsion of the section are measured on the basis of the relative variations $\Delta\lambda/\lambda$ and $\Delta\lambda_{\perp}\lambda_{\perp}$ in the Bragg wavelength of the Bragg gratings 2 and 3 according to the formula:

$$\Delta\varepsilon \;=\; \frac{1}{b(1+v)}\left(\frac{\Delta\lambda}{\lambda} - \frac{\Delta\lambda_{\perp}}{\lambda_{\perp}}\right)$$

in which b is the sensitivity to the longitudinal mechanical strains $\Delta\varepsilon$ of the quantities $\Delta\lambda/\lambda$ and $\Delta\lambda_{\perp}\lambda_{\perp}$ and $v$ is the Poisson's ratio of the support 1.

**14.** Method of measuring the local temperature variations in the vicinity of a device according to one of Claims 1 to 16 mounted on a section, in which method a light signal is transmitted in at least one optical fibre comprising at least two Bragg gratings (2, 3) and the signal output by the or each optical fibre is processed in order to determine the Bragg wavelengths of the Bragg gratings so as to deduce a measurement of the local temperature variations therefrom.

**15.** Method according to the preceding claim, in which a local temperature variation $\Delta T$ of a section is measured on the basis of the relative variations $\Delta\lambda/\lambda$ and $\Delta\lambda_{\perp}\lambda_{\perp}$ of the Bragg wavelengths of the Bragg gratings (2, 3) according to the formula:

$$\Delta T \;=\; T\left[\left(\frac{\left(1+\dfrac{\Delta\lambda}{\lambda}\right)^{\nu}}{1+\dfrac{\Delta\lambda_{\perp}}{\lambda_{\perp}}}\right)^{\frac{1}{a(1+\nu)}} -\;1\right]$$

where a is the sensitivity in $\Delta T/T$ of the quantities $\Delta\lambda/\lambda$ and $\Delta\lambda_{\perp}\lambda_{\perp}$ and $\nu$ is the Poisson's ratio of the support 1.

**Patentansprüche**

1.  Vorrichtung zur Messung mechanischer Verformungen eines Profilteils, wobei diese bezüglich lokaler Temperaturschwankungen korrigiert sind, und zur Messung dieser lokalen Temperaturschwankungen in der Umgebung der Messvorrichtung, wobei diese wenigstens einen Lichtwellenleitersensor mit zwei Faser-Bragg-Gittern (2, 3) umfasst, wobei der Sensor den mechanischen Verformungen des Profilteils ausgesetzt und gegenüber lokalen Temperaturschwankungen empfindlich ist, wobei das erste Faser-Bragg-Gitter (2) sich parallel zur Längsachse des Profilteils erstreckt, **dadurch gekennzeichnet, dass** das zweite Faser-Bragg-Gitter (3) sich gekreuzt zum ersten Faser-Bragg-Gitter (2) erstreckt und **dadurch**, dass die Abschnitte der Lichtwellenleiter, auf denen die beiden Faser-Bragg-Gitter (2, 3) ausgeführt sind, in einem kleinstmöglichen Abstand übereinander liegen, ohne, dass mechanische Interferenzen zwischen den Abschnitten der Lichtwellenleiter auftreten und unter der Einschränkung eines Kontakts ohne Spannungen.

2.  Vorrichtung nach Anspruch 1, **dadurch gekennzeichnet, dass** die Faser-Bragg-Gitter (2, 3) untereinander einen Winkel A bilden, der zwischen 75˚ und 105˚ liegt.

3.  Vorrichtung nach dem vorhergehenden Anspruch, **dadurch gekennzeichnet, dass** der zwischen den beiden Faser-Bragg-Gittern (2, 3) gebildete Winkel A im Wesentlichen 90˚ beträgt.

4.  Vorrichtung nach einem der vorhergehenden Ansprüche, **dadurch gekennzeichnet, dass** die Lichtwellenleiter, die das erste (2) und das zweite (3) Faser-Bragg-Gitter enthalten, auf einem Träger (1) befestigt und vorzugsweise geklebt sind, der integraler Bestandteil des Profilteils oder mit diesem fest verbunden ist.

5.  Vorrichtung nach einem der vorhergehenden Ansprüche, **dadurch gekennzeichnet, dass** das erste Faser-Bragg-Gitter (2), das empfindlich ist gegenüber Temperaturschwankungen und mechanischen Verformungen in Längsrichtung, die durch vertikale Biegung verursacht sind, in der neutralen Ebene der Verformungen unter horizontalen Biegungen des Profilteils angeordnet ist.

6.  Vorrichtung nach einem der vorhergehenden Ansprüche, **dadurch gekennzeichnet, dass** das zweite Faser-Bragg-Gitter (3), das empfindlich ist gegenüber Temperaturschwankungen und mechanischen Verformungen in Längsrichtung, die durch vertikale Biegung verursacht sind, über das erste Faser-Bragg-Gitter (2) gelegt ist und im Wesentlichen senkrecht zur Normalen der Ebene der neutralen Faser unter vertikaler Biegung des Profilteils ist.

7.  Vorrichtung nach einem der Ansprüche 5 oder 6, **dadurch gekennzeichnet, dass** die Faser-Bragg-Gitter (2, 3) in einem nicht verschwindenden Abstand von der Ebene der neutralen Faser unter vertikaler Biegung des Profilteils angeordnet sind.

8.  Vorrichtung nach einem der Ansprüche 1 bis 5, die empfindlich gegenüber mechanischen Längsverformungen ist, die durch eine axiale Torsion des Profilteils verursacht sind, **dadurch gekennzeichnet, dass** das zweite Faser-Bragg-Gitter (3) senkrecht zu der Ebene angeordnet ist, die durch die mittlere Position des Faser-Bragg-Gitters (2) und die Torsionsachse des Profilteils läuft.

9.  Vorrichtung nach dem vorhergehenden Anspruch, **dadurch gekennzeichnet, dass** die Faser-Bragg-Gitter (2, 3) in einem nicht verschwindenden Abstand von der Torsionsachse des Profilteils angeordnet sind.

**10.** Vorrichtung nach einem der vorhergehenden Ansprüche, **dadurch gekennzeichnet, dass** sie mehrere Sensoren umfasst, die in Reihe entlang der Achse des Profilteils angeordnet und untereinander durch einen gemeinsamen Lichtwellenleiter (4) verbunden sind.

**11.** Vorrichtung nach einem der vorhergehenden Ansprüche, **dadurch gekennzeichnet, dass** die Faser-Bragg-Gitter (2, 3) auf dem Träger der Schleifleiste eines Stromabnehmers für Triebwagen elektrischer Züge montiert sind.

**12.** Verfahren zur Messung mechanischer Verformungen eines Profilteils, das mit einer Vorrichtung gemäß einem der vorhergehenden Ansprüche ausgestattet ist, bei dem ein Lichtsignal in wenigstens einem Lichtwellenleiter übertragen wird, der wenigstens zwei Faser-Bragg-Gitter (2, 3) umfasst, und das aus dem oder jedem der Lichtwellenleiter kommende Signal verarbeitet wird, um die Bragg-Wellenlängen der Faser-Bragg-Gitter zu bestimmen und um daraus eine Messung der mechanischen Verformungen des Profilteils abzuleiten, die bezüglich des Einflusses der Temperaturschwankungen korrigiert sind.

**13.** Verfahren nach dem vorhergehenden Anspruch, bei dem Folgendes gemessen wird: eine Veränderung der mechanischen Längsverformungen $\Delta\varepsilon$, die durch Biegung und/oder Dehnung und/oder Torsion des Profilteils verursacht werden, ausgehend von den relativen Veränderungen $\Delta\lambda/\lambda$ und $\Delta\lambda_\perp\lambda_\perp$ der Bragg-Wellenlängen der Faser-Bragg-Gitter 2 und 3 gemäß der Formel:

$$\Delta\varepsilon = \frac{1}{b \cdot (1+\nu)}\left(\frac{\Delta\lambda}{\lambda} - \frac{\Delta\lambda_\perp}{\lambda_\perp}\right)$$

wobei b die Empfindlichkeit der Größen $\Delta\lambda/\lambda$ und $\Delta\lambda_\perp\lambda_\perp$ gegenüber mechanischen Längsverformungen $\Delta\varepsilon$ und $\nu$ der Poissonkoeffizient des Trägers 1 ist.

**14.** Verfahren zur Messung lokaler Temperaturschwankungen in der Umgebung einer Vorrichtung gemäß einem der Ansprüche 1 bis 16, die auf einem Profilteil montiert ist, bei dem ein Lichtsignal in wenigstens einem Lichtwellenleiter übertragen wird, der wenigstens zwei Faser-Bragg-Gitter (2, 3) umfasst, und das aus dem oder jedem der Lichtwellenleiter kommende Signal verarbeitet wird, um die Bragg-Wellenlängen der Faser-Bragg-Gitter zu bestimmen, um daraus eine Messung der lokalen Temperaturschwankungen abzuleiten.

**15.** Verfahren nach dem vorhergehenden Anspruch, bei dem eine lokale Temperaturänderung $\Delta T$ eines Profilteils gemessen wird, ausgehend von den relativen Veränderungen $\Delta\lambda/\lambda$ und $\Delta\lambda_\perp\lambda_\perp$ der Bragg-Wellenlängen der Faser-Bragg-Gitter (2, 3) gemäß der Formel:

$$\Delta T = T \cdot \left[\left(\frac{\left(1+\dfrac{\Delta\lambda}{\lambda}\right)^\nu}{1+\dfrac{\Delta\lambda_\perp}{\lambda_\perp}}\right)^{\frac{1}{a\cdot(1+\nu)}} - 1\right]$$

wobei a die Empfindlichkeit der Größen $\Delta\lambda/\lambda$ und $\Delta\lambda_\perp\lambda_\perp$ gegenüber $\Delta T/T$ und $\nu$ der Poissonkoeffizient des Trägers 1 ist.

## FIG.1

FIG.2

FIG.3

FIG.4a

FIG.4b

FIG.4c

FIG.4d

FIG.4e

FIG.5

20

12

11

<u>FIG.6</u>

5

6

100

2

3

<u>FIG.7</u>

FIG.8a

FIG.8b

FIG.9a

FIG.9b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2408570 A
- FR 2850745 A1